# EUROPEAN PATENT SPECIFICATION

(11) **EP 4 366 002 B1**
(45) Date of publication and mention of the grant of the patent: **13.08.2025**
(21) Application number: 22205629.3
(22) Date of filing: 04.11.2022
(51) Int. Cl.: H01M 8/021, F02K 3/00, H01M 8/0228, H01M 8/04111, H01M 8/243, H01M 8/2475, H01M 8/2484, H01M 8/2495, H01M 8/12

(54) **SOLID OXIDE FUEL CELL STACK FOR AN AIRCRAFT ENGINE**
FESTOXIDBRENNSTOFFZELLENSTAPEL FÜR EIN FLUGZEUGTRIEBWERK
EMPILEMENT DE PILES À COMBUSTIBLE À OXYDE SOLIDE POUR MOTEUR D'AÉRONEF

(43) Date of publication of application: 08.05.2024
(73) Proprietor: Airbus Operations GmbH, 21129 Hamburg (DE)
(72) Inventor: Geisler, Helge Ingolf, 21129 Hamburg (DE); Nehter, Pedro, 21129 Hamburg (DE); Vignesh, Ahilan, 21129 Hamburg (DE)

(56) References cited:
- FR-A1- 3 104 139
- JP-A- 2014 137 977
- US-A1- 2014 047 814

## Description

### Technical field

The invention relates to a solid oxide fuel cell stack for an aircraft engine as well as an aircraft engine having a solid oxide fuel cell stack.

### Background of the invention

Propulsion for transport or passenger aircraft is typically provided by jet or combustion engines using hydrocarbon based fuel, which lead to a certain carbon footprint, NOx emissions as well as noise. As an alternative, hydrogen produced by renewable energy for future aircraft is a zero-carbon fuel burned with oxygen from the atmosphere. However, the direct usage of hydrogen in a jet engine also results in the generation of NOx. Additionally, this process results in low efficiency of the engine.

Solid oxide fuel cells (SOFC) are energy conversion devices, which use hydrogen as fuel and converts its chemical energy into electrical and thermal energy. The power is generated by an electrochemical reaction, which is a safe non-combustion reaction. SOFCs are widely used for stationary application and are able to produce power with high fuel utilization of up to 85%. An SOFC consists of an anode, a cathode, electrolyte, and current collecting components/interconnectors. The oxygen reduction reaction occurs in the porous cathode by accepting electrons and producing oxide ions, which travel through the gas tight electrolyte to the anode interface. The hydrogen fuel gets oxidized at the anode interface by accepting oxide ions and producing electrons, which pass to the cathode side through an external electrical circuit. The operating temperature of SOFC is usually in a range of 600°C to 900°C, which depends on the choice of SOFC materials.

Concepts exist, in which SOFCs are integrated into drive units for propulsion of aircraft. For example, EP 2 700 120 A1 discloses a drive unit, comprising a combustion chamber for combusting a fuel/air mixture, and a solid oxide fuel cell device, wherein the fuel cell device comprises at least one fuel cell which in each case comprises an anode that is couplable to a fuel line, a cathode that is couplable to an air source, and a fluid outlet, and is arranged upstream of the combustion chamber. The combustion chamber comprises a combustion chamber inlet for supplying the fuel/air mixture, and a combustion chamber outlet for discharging exhaust gas, and the combustion chamber inlet is connected to the fluid outlet of the fuel cell device.

SOFC for stationary application are often chosen in the form of planar type SOFC, which have a low gravimetric power density and may experience high thermal stress to the cell at fast heating and cooling rates. The low gravimetric power density of the stack is mainly due to a heavy bipolar plate used in the design. Alternatively, tubular design SOFCs offer a huge advantage on high gravimetric power density, high surface to volume ratio and low thermal stresses. Moreover, an integration of tubular SOFC to a stack is flexible depending on the application. Above-mentioned drive unit uses a ring of tubular SOFC.

Published patent applications US2014/047814, FR3104139 and JP2014137977 disclose ring-shaped fuel cell assemblies of tubular solid oxide fuel cells.

Stacks with a large number of tubular SOFCs staggered in two dimensions may experience a disadvantageously wide temperature profile inside the stack and difficulties in extracting the heat from the stack. This may result in the degradation of cell materials and result in degraded performance, and the integration of a cooling system to harmonize the wide temperature profile would be technically challenging.

### Summary of the invention

It is thus an object of the invention to propose an alternative solid oxide fuel cell stack for an aircraft engine having tubular SOFCs staggered in one or two dimensions, which allows to deliver power at a high efficiency and with a clearly reduced risk of degradation.

This object is met by the solid oxide fuel cell stack for an aircraft engine having the features of independent claim 1. Advantageous embodiments and further improvements may be gathered from the sub claims and the following description.

A solid oxide fuel cell stack for an aircraft engine is proposed, comprising a plurality of ring-shaped fuel cell assemblies of a plurality of tubular solid oxide fuel cells each, the fuel cells being arranged parallel to each other and distributed circumferentially around a central axis, at least one first stacking manifold for each fuel cell assembly in contact with a first side of the individual fuel cell assembly, at least one second stacking manifold for each fuel cell assembly in contact with a second side of the individual fuel cell assembly, and a central recess for leading an engine shaft through, wherein the fuel cells each comprise a anode and a cathode, wherein the fuel cell assemblies are stacked in an axial direction through pairs of first and second stacking manifolds contacting each other, wherein each first stacking manifold comprises a hydrogen inlet and is connected to first ends of the anodes of the respective fuel cells, and wherein each second stacking manifold comprises a hydrogen and steam outlet and is connected to second ends of the anodes of the respective fuel cells.

In the following, the term "solid oxide fuel cell" is referred to as "SOFC" for an improved readability. Also, in the context of this invention, the term "fuel cell" refers to a solid oxide fuel cell if another type of fuel cell is not explicitly mentioned.

The fuel cell stack according to the invention thus comprises several ring-shaped fuel cell assemblies that are delimited by a first and a second stacking manifold each, wherein the individual assemblies are aligned in an axial arrangement and are electrically connected to each other to form the fuel cell stack. By providing the central recess, an engine shaft can reach through the fuel cell stack. The overall design of the fuel cell stack is hollow-cylindrical and each of the assemblies comprises a ring shape. The ring shape may include at least one ring of tubular SOFCs arranged in a circumferential direction on the same diameter. If desired, several concentric rings may be formed in each assembly, in which the SOFCs are also packed in the radial direction.

The first stacking manifold and the second stacking manifold axially enclose the respective assembly and provide for their electrical interconnection. The stacking manifolds may comprise a single part that electrically connects at least a part of the SOFCs in a parallel connection. However, also segmented stacking manifolds are conceivable that provide a plurality of individual groups of electrically parallel connected SOFCs, which may then be connected to each other in a serial connection, upon desire. The first stacking manifolds are used for delivering hydrogen into the SOFCs. The second stacking manifolds are used for receiving residual hydrogen that flows out of the SOFCs. Thus, the stacking manifolds may provide the function of electrical connection, i.e. a current collection, and the connection to a hydrogen source and hydrogen sink at the same time. Combining these functions into a single component allows to minimize the material usage. The stacking manifolds may be designed as hollow ring-shaped devices that are capable of being flown-through in order to distribute and/or collect fluids. They can be understood as flat chambers with a shape adapted to conform the respective SOFCs. At a side facing the SOFCs, the stacking manifolds may have a flat, platelike shape, which allows to electrically connect the respective stacking manifold to the respective SOFCs.

The individual tubular SOFCs are open on two sides and may comprise one of a variety of different material combinations. When choosing or designing the SOFCs, the internal diameter and the external diameter, the spacing distance, and the surface available for the fuel cell process can be influenced. The tubular shape of the SOFCs ensures that a high mass flow of particularly hydrogen is achieved.

The electrolyte of these SOFCs preferably comprises a ceramic material that is conductive to oxygen ions while having an insulating effect on electrons. Doped zirconium dioxide, for example doped with yttrium, in particular 8 mol % yttrium doped zirconium may be a suitable material. The cathode of the SOFC may also be made from a ceramic material, which is conductive both to oxide or oxygen ions and to electrons, for example based on doped lanthanum manganate, with such doping taking place with the use of strontium or the like. Mixed ionic and electronic conductive material may be used, e.g. (La0.60Sr0.40)0.95Co0.20Fe0.8003-X. An anode of this fuel cell may be made from a cermet material, which comprises ceramic and metallic material. For example, a compound comprising a mixed conducting material, e.g. Ni-8YSZ nickel-doped and yttrium-doped zirconium oxide, in order to conduct ions and electrons. With the use of tubular SOFCs a multitude of self-contained fuel cells can be arranged in a ring-shaped manner around a shaft between a turbine and a compressor so that particularly high electrical power can be provided with integration that is as compact as possible, and at the same time the through-flow of hydrogen and air is improved.

The design of the tubular SOFCs may comprise circular, elliptical, rectangular, polygonal, or other regularly shaped or irregularly shaped cross sections, to which shapes the subject of the invention is not limited. This also relates to the course of a cross section along the length of a tubular SOFC, which course is either constant, resulting for example in a cylindrical shape of the ceramic tube, or is not constant, resulting in a conical shape. Furthermore, the tubular SOFCs may also be designed with integrated form-fitting elements to simplify holding the tubular SOFCs in receiving openings.

The SOFCs may comprise an anode formed by an inner surface, and a cathode formed by an outer surface. The design of the tubular SOFCs is thus particularly simple and robust, and conducting the electrical power provided can be implemented by a mechanical mount of the SOFCs in the stacking manifolds.

As an alternative to this, each SOFC may comprise a separate first electrode, which is connected to the outside of the SOFC, and a separate second electrode, which is connected to the inside of the SOFC. In this way, conduction of the electrical power to the stacking manifolds and thus, to an external circuit, is conducted.

The voltage and power delivered by the fuel cell stack depends on the number of the SOFCs, their electrical connection, as well as of the number of assemblies arranged in the stack. The number of SOFCs in turn depends on the outer diameters, which also influence the packing density given limited dimensions of the stack inside the engine. Generally, SOFCs with the lowest outer diameter may produce a high power stack due to its occupancy of the large number of cells in the assemblies.

In an advantageous embodiment, the plurality of tubular solid oxide fuel cells of each ring-shaped assembly are staggered radially to form at least two rings of fuel cells. Thus, the packing density of the stack is increased and the maximum power to be delivered by the stack can be greatly raised. The SOFCs may form a square or a hexagonal packing structure, wherein the hexagonal packing structure leads to a higher packing density.

However, it is conceivable that the SOFCs are spaced apart from each other, both in the radial and the circumferential direction, in order to let air flow into porous cathodes.

In an advantageous embodiment, at least one of the fuel cell assemblies comprises at least two groups of fuel cells separated in the radial direction, wherein the at least two groups comprise different types of solid oxide fuel cells with different operating temperature ranges. Thus, the stack has the capability to operate at a wide range of operating temperatures, such that an uneven temperature distribution in the stack does not influence the integrity of the stack. Consequently, bigger, and wider stack designs can be used.

In an advantageous embodiment, the operating temperature range of a radially outer group is higher than the operating temperature range of a radial further inward group. Thus, by arranging SOFCs with a higher operating temperature in radially outer regions is preferred.

In an advantageous embodiment, at least one of the fuel cell assemblies comprises three groups of fuel cells separated in the radial direction with different operating temperature ranges. The power of the stack can thus be clearly increased due to a clearly increased volume used by the SOFCs thanks to three consecutively increased operating temperature regions in the radial direction.

In an advantageous embodiment, a radially outermost group comprises electrolyte supported solid oxide fuel cells, wherein a radially central group comprises anode supported solid oxide fuel cells, and wherein a radially innermost group comprises metal supported solid oxide fuel cells. Electrolyte supported SOFCs comprise anodes and cathodes being realized as a coating on opposite surfaces of a ceramic electrolyte. These comprise the highest operating temperature range. A typical anode supported SOFC may comprise an anode made from a cermet mixture of nickel and yttria stabilized zirconia (YSZ). An anode functional layer, an electrolyte, and a cathode layer are sequentially formed on an anode supporter. The operating temperature range may be slightly below the range of the electrolyte supported SOFCs. Still further, metal-supported SOFCs conventionally comprise an anode electrode layer, which is formed on a porous metal support, which may exemplarily be obtained by sintering Fe-Cr-based alloy powder, and an electrolyte layer may be formed thereon to create the SOFC. Here, the operating temperature range is lower than the other two mentioned types of SOFC.

In an advantageous embodiment, the radially outermost group comprises an operating temperature range of 750°C to 850°C, wherein the radially central group comprises an operating temperature range of 650°C to 750°C, and wherein a radially innermost group comprises an operating temperature range of 550°C to 650°C. The operating temperature may thus spread from 550°C to 850°C over the radial extension of the stack, which allows to safely operate the stack without requiring a complicated cooling system to cool the stack or harmonize the stack temperature distribution. The design allows to tolerate a large deviation of operating temperatures.

In an advantageous embodiment, the first stacking manifold and the second stacking manifold are configured to alternately flow hydrogen from the hydrogen inlet of the first stacking manifold through circumferentially successive fuel cells in an alternating axial flow direction in a zigzag manner. A laminar flow of hydrogen through the fuel cells can be achieved also at high flow rates.

In an advantageous embodiment, the first stacking manifold is configured to flow hydrogen from the hydrogen inlet of the first stacking manifold through circumferentially successive fuel cells in the same axial flow direction towards the second stacking manifold. This simplifies the hydrogen supply to the individual fuel cells. Appropriately choosing flow resistances along the flow path of the hydrogen to the individual fuel cells allows to let the hydrogen flow laminarly.

In an advantageous embodiment, the fuel cells are spaced apart from each other in a radial direction, wherein the fuel cell stack comprises a housing enclosing the fuel cells, and wherein an air inlet and an air outlet are arranged at the housing to let air flow through the housing to flush the fuel cells with air. Thus, the fuel cells are enclosed by a housing and are placed in an interior space of the housing. Air enters the housing and flows from the first stacking manifold to the second stacking manifold. In doing so, the fuel cells are flushed by the air, which is then able to enter the cathodes, particularly when they are porous and are at the outermost layer of the fuel cells.

It is conceivable to feed colder air to the metal supported SOFCs through air inlets at radially inward positions, since this type of SOFCs requires colder air than the other types. Air inlets at radially outward positions may supply hotter air primarily to the electrolyte supported SOFCs. Once the air enters into the stack, the air travels through the stack in axial direction to maintain an optimal temperature of the stack. Furthermore, air may also be supplied from the side of the stack.

In an advantageous embodiment, the stack further comprises baffle plates inside the housing, wherein the baffle plates are spaced apart from each other in an axial direction and extend in a radial direction, wherein axially consecutive baffle plates have different radial dimensions, and wherein the baffle plates have openings to let the fuel cells pass through. By using the baffle plates, the air flow between the first stacking manifold and the second will repeatedly be deflected. This leads to a greater vorticity, an improved distribution and a more harmonic oxygen density for all fuel cells arranged inside the housing. Additionally, this will provide mechanical support for the tubular SOFCs. When an axial and lateral air flow is provided, the baffle plates may comprise an additional perforation for letting air penetrate in axial direction. This supports maintaining the stack temperature in optimal condition.

In an advantageous embodiment, the stacking manifolds comprise stainless steel and an aluminium oxide coating. This allows to expose the stainless steel only to the preferred locations of the fuel cells, where the current has to be collected. The coated Al2O3 layer prevents high temperature corrosion and chromium evaporation from the stainless steel material. The use of stainless steel is beneficial for the durability, mechanical stability, and corrosion resistance. The shape, size, and locations of uncoated parts of the stacking manifolds depend mainly on the electrical connection circuit, which is explained further below.

In an advantageous embodiment, the stacking manifolds comprise a hole for each of the fuel cells. Preferably, an interior surface of the respective hole is at least partially uncoated to provide an electrical contact to the respective fuel cell. The holes also serve for mechanically supporting the fuel cells.

The invention further relates to an aircraft engine, comprising a solid oxide fuel cell stack according to the above description, a combustion chamber downstream the fuel cell stack, a turbine unit downstream the combustion chamber, and a compressor unit arranged upstream the fuel cell stack and connected to the turbine through an engine shaft extending through the central recess. The engine is able to provide a thrust force and electrical power at the same time by only consuming hydrogen and air, wherein the NOx emission is clearly reduced compared to known hydrogen consuming combustion engines.

In an advantageous embodiment, the combustion chamber is in fluid communication with the hydrogen and steam outlets of the fuel cell assemblies and comprises an air inlet. Thus, residual hydrogen flowing out of the anodes of the fuel cells is combusted inside the combustion chamber. In addition, the combustion chamber may also comprise a separate hydrogen inlet to allow a better mass flow control of hydrogen and to operate the combustion chamber at least partially independent from the operation of the fuel cell stack.

### Brief description of the figures

In the following, the attached drawings are used to illustrate exemplary embodiments in more detail. The illustrations are schematic and not to scale. Identical reference numerals refer to identical or similar elements. They show:
Fig. 1 shows a schematic sectional illustration of an aircraft engine having a fuel cell stack according to an exemplary embodiment.
Fig. 2 shows a schematic illustration of the fuel cell stack and a combustion chamber.
Fig. 3a and 3b show a schematic illustration of segments of a stacking manifold as well as a schematic sectional view of a stacking manifold.
Fig. 4 shows a schematic illustration of a plurality of interconnected segments of a stacking manifold.
Fig. 5 shows a schematic illustration of a front face of a fuel cell assembly.
Fig. 6 shows a schematic illustration of a hydrogen supply into a fuel cell assembly.
Fig. 7 shows a schematic illustration of a ring of fuel cells of fig. 6 and their hydrogen supply.
Fig. 8 shows a modified hydrogen distribution into a ring of fuel cells.
Fig. 9 shows an interior space of a fuel cell assembly and an air flow created therein.
Fig. 10 shows a modified interior space of a fuel cell assembly and an air flow created therein around baffle plates.

### Detailed description of exemplary embodiments

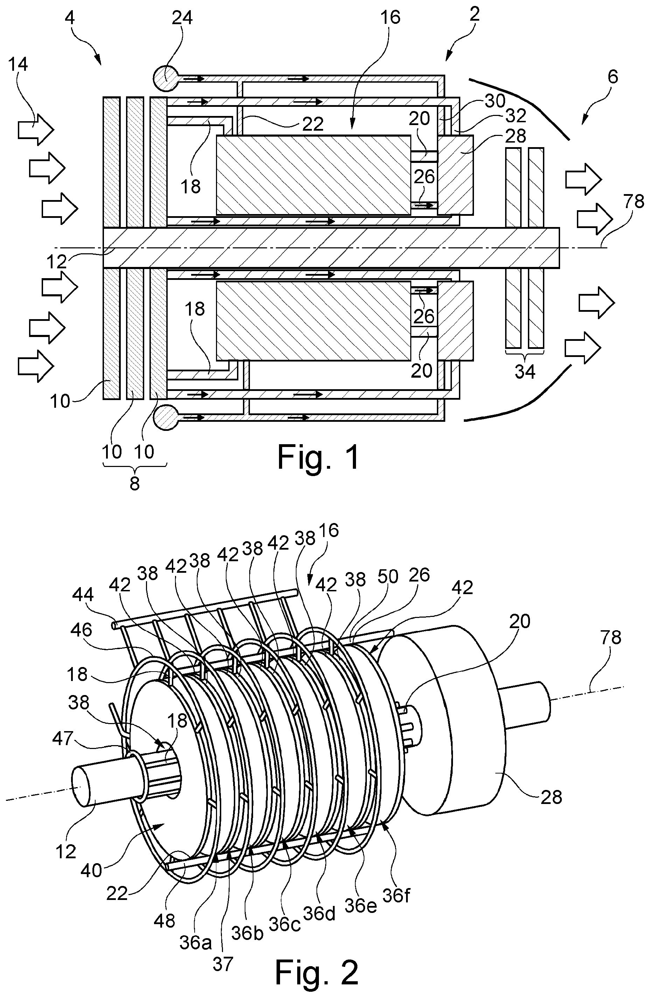

Fig. 1 shows an aircraft engine 2 in a schematic sectional drawing. A front side 4 is arranged on the left-hand side of fig. 1, while a rear side 6 is arranged on the righthand side of fig. 1. At the front side 4, a compressor unit 8 is present, which comprises exemplarily three compressor wheels 10 arranged one behind each other on an engine shaft 12. They receive air 14 from the surrounding of the engine 2 and compress it. A part of the compressor wheels 10 may be realized in the form of a fan.

Downstream of the compressor unit 8, a solid oxide fuel cell stack 16 is provided, which will be explained in further detail below. It comprises air inlets 18, which are in fluid communication with the compressor unit 8. Air that enters the fuel cell stack 16 flows out through air outlets 20. Furthermore, hydrogen inlets 22 are provided, which are coupled with a hydrogen source 24 for flowing hydrogen into the fuel cell stack 16. Hydrogen and steam outlets 26 are provided to let residual hydrogen as well as steam exit the fuel cell stack 16. The fuel cell stack 16 is provided for conducting a fuel-cell process by consuming hydrogen from the hydrogen source 24 and oxygen from air 14 to produce electricity.

Downstream the fuel cell stack 16, a combustion chamber 28 is provided, which receives air from the fuel cell stack 16 through the air outlet 20 as well as residual hydrogen and steam from the hydrogen and steam outlet 26. In addition, a separate hydrogen inlet 30 and an additional air inlet 32 are provided, through which additional hydrogen from the hydrogen source 24 and air from the compressor unit 8 is fed into the combustion chamber 28. Resultantly, oxygen depleted air and steam exit the combustion chamber 28 and are fed into a turbine unit 34 downstream the combustion chamber 28.

The turbine unit 34 is coupled with the compressor unit 8 through the engine shaft 12. It is impinged by oxygen depleted air and steam and will thus be driven to rotate. The rotation is transferred to the compressor unit 8 through the engine shaft 12 and leads to providing mechanical power for the compressor unit 8. The engine 2 thus produces thrust and electrical power.

Fig. 2 shows the fuel cell stack 16 in a more detailed illustration. Here, a plurality of ring-shaped fuel cell assemblies 36a, 36b, 36c, 36d, 36e, and 36f are shown. They are arranged one after another in an axial direction along the engine shaft 12 and form the fuel cell stack 16. To route the engine shaft 12 through the fuel cell stack 16, a central recess 38 is provided that extends through all ring-shaped fuel cell assemblies 36a to 36f.

Each of the fuel cell assemblies 36a to 36f comprise a first stacking manifold 40 and a second stacking manifold 42. The first stacking manifolds 40 each comprise a plurality of air inlets 18, which are distributed in a circumferential direction. In this exemplary embodiment, air inlets 18 are provided at radial outer regions and radial inner regions at the same time. Exemplarily, an air manifold 44 is provided, which delivers air to several circular pipes 46, which each surround one of the first stacking manifolds 40 leading to the radial outer air inlets 18. An inner circular pipe 47, which receives air as well, surrounds the engine shaft 12 and is connected to the radial inner air inlets 18. Each of the second stacking manifolds 42 comprises air outlets 20, e.g. in a radial inner region of the second stacking manifolds 42, which outlets 20 are directly connected to the combustion chamber 28.

Still further, each of the first stacking manifolds 40 comprises the hydrogen inlet 22, which is connected to a hydrogen supply pipe 48. In analogy to this, each of the second stacking manifolds 42 comprises the hydrogen and steam outlet 26 connected to a hydrogen and steam pipe 50. Exemplarily, the fuel cell assemblies 36a to 36f may constitute an electrical serial connection by directly contacting them through their opposed stacking manifolds. By providing such a serial arrangement , the delivered voltages of each fuel-cell assembly 36a to 36f are added to a total voltage. Still further, each of the fuel cell assemblies 36a to 36f comprises a plurality of fuel cells, which are electrically interconnected depending on desired electrical parameters and will be explained in the following. However, it may also be possible to provide gaps 37 between the individual fuel cell assemblies 36a to 36f and choose a different connection scheme through a suitable wiring.

As apparent from both fig. 1 and fig. 2, the combustion chamber 28 may comprise a hollow-cylindrical shape having an outer diameter that at least substantially corresponds to the outer diameter of the fuel cell assemblies 36. The detail design of the combustion chamber 28 is not crucial for the gist of the invention and is thus not explained in detail herein. A skilled person will be able to consider a suitable design for the combustion chamber 28.

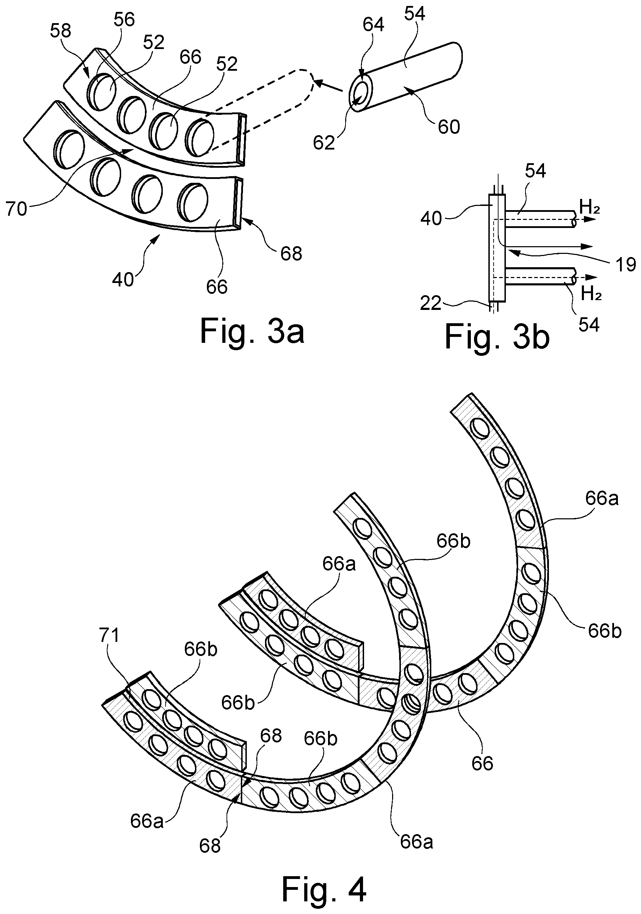

Fig. 3a shows a part of a first stacking manifold 40, which comprises a plurality of holes 52 for receiving a tubular fuel cell 54 each. Inside each of the holes 52, an interface connector 56 is provided in the form of uncoated stainless steel. The first stacking manifold 40 is exemplarily made from stainless steel and comprises a thin aluminium oxide coating 58 except in places, where an electrical contact is required, e.g. at said interface connectors 56. This allows to provide a design solution for compiling the stacking manifolds 40 and 42 and the interface connectors 56 as a single component, which minimizes the stack weight, improves the electron transport, and also minimizes chromium release from the stacking manifolds 40 and 42.

The fuel cell 54 comprises a cathode 60 as an outer layer, an anode 62 as an inner layer and an electrolyte 64 between both. For their operation, hydrogen is routed into the anodes 62 and flows through the tubular fuel cells 54, while air enters the fuel cells 54 through pores inside the cathode 60. Hence, the first stacking manifold 40 is designed to let the hydrogen flow through holes 52 into the anodes 62. The holes 52 are distributed on the stacking manifolds 40 and 42 to space apart the fuel cells 54 from each other, such that the cathodes 60 can be flushed by air.

In the exemplary embodiment, the first stacking manifold 40 and the second stacking manifold 42 comprise a plurality of individual segments 66, which provide a parallel connection to a small group of fuel cells 54. Several of these groups can be connected in a serial connection to each other through interface connectors 68, which are also realized in the form of uncoated surfaces of the first stacking manifold 40. The segments and 66 are spaced apart in the radial direction, such that a gap 70 is created, through which air can enter the respective fuel cell assembly 36 to flush the fuel cells 54 with air.

Fig. 3b shows a schematic sectional view of a first stacking manifold 40. Here, exemplarily one of the hydrogen inlets 22 is shown, through which hydrogen enters the first stacking manifold 40 and is distributed to all associated SOFCs 54. Furthermore, an air inlet 18 of the first stacking manifold 40 is shown, through which air enters the first stacking manifold 40 and is distributed to a plurality of air supply openings 19. These may be separate openings in the respective first stacking manifold 40 or may be realized through gaps between segments 66 in a radial and/or circumferential direction. In analogy, the second stacking manifold 42 may comprise several air exit openings, through which unused air from the air supply openings 19 can enter the second stacking manifold 42.

In fig. 4, an exemplary interconnection of several segments 66 is shown. For the sake of better understanding, positive terminals in the form of segments 66a are hatched differently than negative terminals 66b. Positive terminals 66a and negative terminals 66b follow on each other in an alternating manner in a circumferential direction to form a ring shape. They are connected through interface connectors 68 arranged at the sides of the segments 66a and 66b. A plurality of concentrically ring-shaped arrangements of segments 66a and 66b are created, which are only indicated partially in fig. 4. A radial connection between one of the segments 66a or 66b of one ring is connected to one of the segments 66a or 66b of an adjacent ring through an additional connector 71. Here, a segment 66b constituting a negative terminal is connected to a radially further inwardly positioned segment 66a forming a positive terminal. The interconnections can be tailored to the individual needs.

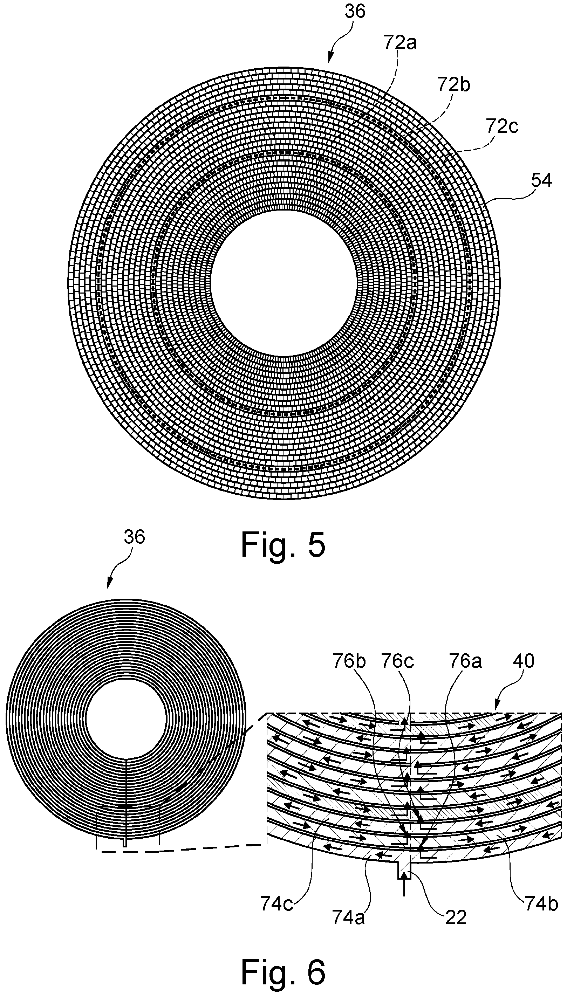

Fig. 5 shows a schematic view of a fuel cell assembly 36. Here, a plurality of individual fuel cells 54 are shown in a dense packing. Here, several concentrical rings of fuel cells 54 are provided that enclose each other and form a hollow-cylindrical shape. Thus, the fuel cell assembly 36 a has a plurality of fuel cells 54 staggered radially and circumferentially. Exemplarily, three groups 72a, 72b and 72c of fuel cells 54 are created, which comprise different types of tubular SOFCs 54. For example, the radially innermost group 72a comprises electrolyte supported SOFC 's, while the radially central group comprises anode supported SOFC 's and while the radially outermost group 72c comprises metal supported SOFC 's. These comprise different operating temperature ranges of substantially 550°C to 650°C for the first group 72a, 650°C to 750°C for the second group 72b and 750°C to 850°C for the third group 72c. Thus, a cumbersome and technically challenging harmonization of operating temperatures inside the fuel cell stack 16, i.e. inside each of the fuel-cell assemblies 36a to 36f, is not required.

Fig. 6 shows the hydrogen inlet 22 arranged in the first stacking manifold 40 and the distribution of hydrogen to the individual fuel cells 54. Here, the first stacking manifold 40 distributes the hydrogen to individual rings of fuel cells 54 one after another from the radial outermost position to a radial innermost position. Here, a flow path 74a directly follows on the hydrogen inlet 22 and runs in a circumferential direction about 360°. In doing so, all fuel cells 54 connected to this flow path 74a are supplied with hydrogen. Afterwards, hydrogen passes through an interconnection opening 76a and reaches into a second circumferential flow path 74b. Here, the hydrogen flows in a circumferential direction in an opposite direction about 360° and all connected fuel cells 54 are supplied with hydrogen as well. Afterwards, a further interconnection opening 76b is passed and hydrogen flows into a further flow path 74c, which again runs in a circumferential direction about 360° in an opposite direction and so on. Hence, all of the fuel cells 54 will be supplied with hydrogen flowing into the hydrogen inlet 22 one after another.

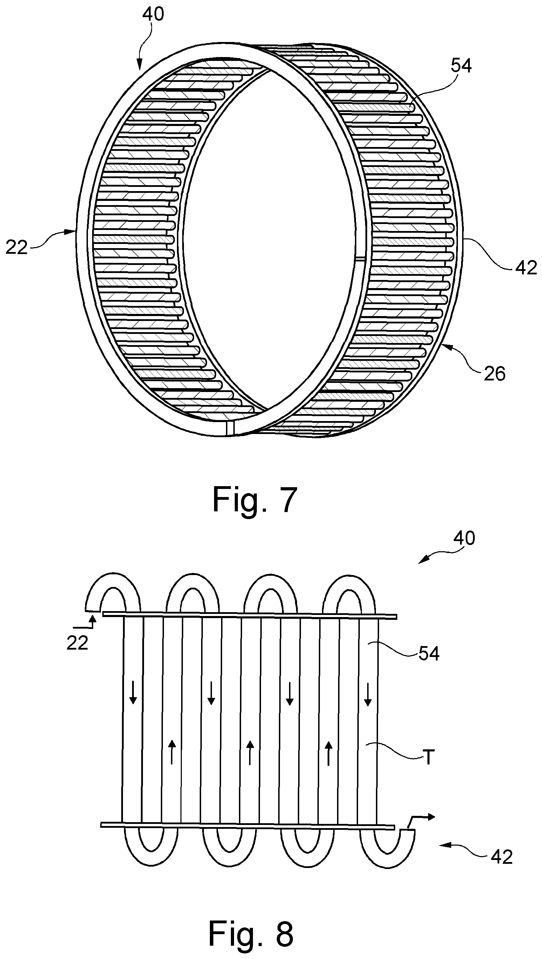

The supply of one ring of tubular SOFCs 54 with hydrogen is shown in a spatial illustration in fig. 7 for further clarification. Here, hydrogen enters the hydrogen inlet 22, is distributed in a circumferential direction of the first stacking manifold 40, to feed hydrogen into all individual fuel cells 54. After flowing through the fuel cells 54, hydrogen reaches the second stacking manifold 42 and exits through the hydrogen and steam outlet 26. It is clear that the hydrogen supply to the hydrogen inlet 22 is sufficient to feed further rings of tubular SOFCs by appropriately balancing all flow resistances in the first stacking manifold 40 and the tubular fuel cells 54 and choosing a suitable supply pressure at the hydrogen inlet 22.

Fig. 8 shows a modified approach for distributing hydrogen. Here, the first stacking manifold 40 and the second stacking manifold 42 are configured to alternately flow hydrogen from the hydrogen inlet 22 of the first stacking manifold 40 through circumferentially successive fuel cells 54 in an alternating axial flow direction in a zigzag manner.

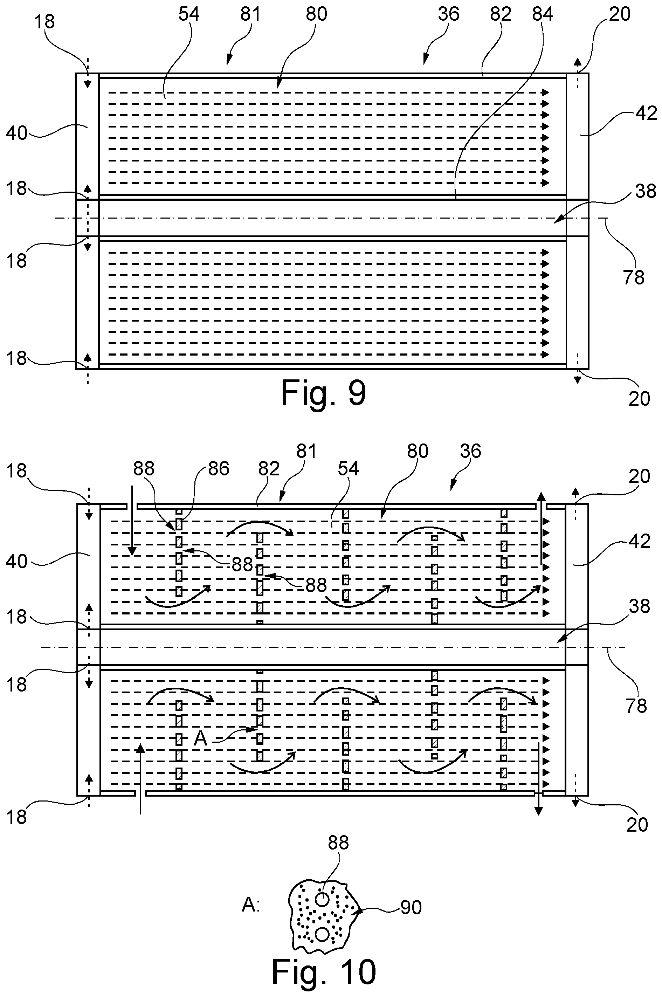

In fig. 9, a sectional view of a fuel cell assembly 36 is shown. Here, a central axis 78 is indicated, along which the central recess 38 extends. All tubular fuel cells 54 are arranged parallel to the central axis 78 and are packed between the first stacking manifold 40 and the second stacking manifold 42. As shown before, several air inlets 18 are provided, which let air flow in a radial direction into the first stacking manifold 40, from which it will be distributed into an interior space 80 of a housing 81 of the fuel cell assembly 36. The fuel cell assembly 36 exemplarily comprises a closed housing 81 having an outer housing skin 82 and an inner housing skin 84, which are provided extending between the first stacking manifold 40 and the second stacking manifold 42. The inner housing skin 84 has a hollow cylindrical shape with an inner diameter corresponding to the outer diameter of the central recess 38. The outer housing skin 82 has an outer diameter that corresponds to the outer diameter of the stacking manifolds 40 and 42. Air that enters the air inlets 18 are flowing through the interior space 80 and thereby all fuel cells 54 are flushed with air. After passing the fuel cells 54, the air exits the air outlets 20. In the exemplary embodiment of fig. 9, the air flows in a substantially axial direction.

In fig. 10 this arrangement is modified in that a plurality of baffle plates 86 having different sizes and extending in a radial direction is provided. The baffle plates have openings 88 for letting the fuel cells 54 pass through. By providing the baffle plates with different diameters, the air flow direction changes several times and thus, the flushing of the fuel cells 54 is improved. An additional perforation 90 allows air to pass through the baffle plates 86 in an axial direction.

### Reference numerals

- 2: aircraft engine
- 4: front side
- 6: rear side
- 8: compressor unit
- 10: compressor wheel
- 12: engine shaft
- 14: air
- 16: solid oxide fuel cell stack
- 18: air inlet
- 19: air supply opening
- 20: air outlet
- 22: hydrogen inlet
- 24: hydrogen source
- 26: hydrogen and steam outlet
- 28: combustion chamber
- 30: separate hydrogen inlet
- 32: additional air inlet
- 34: turbine unit
- 36: fuel cell assembly
- 37: gap
- 38: central recess
- 40: first stacking manifold
- 42: second stacking manifold
- 44: air manifold
- 46: circular pipe
- 48: hydrogen supply pipe
- 50: hydrogen and steam pipe
- 52: hole
- 54: tubular fuel cell
- 56: interface connector
- 58: aluminium oxide coating
- 60: cathode
- 62: anode
- 64: electrolyte
- 66: segment
- 68: interface connector
- 70: gap
- 71: connector
- 72: group of fuel cells
- 74: flow path
- 76: interconnection opening
- 78: central axis
- 80: interior space
- 81: housing
- 82: outer housing skin
- 84: inner housing skin
- 86: baffle plate
- 88: opening
- 90: perforation

## Claims

1. Solid oxide fuel cell stack (16) for an aircraft engine (2), comprising:
a plurality of ring-shaped fuel cell assemblies (36) of a plurality of tubular solid oxide fuel cells (54) each, the fuel cells (54) being arranged parallel to each other and distributed circumferentially around a central axis (78),
at least one first stacking manifold (40) for each fuel cell assembly (36) in contact with a first side of the individual fuel cell assembly (36),
at least one second stacking manifold (42) for each fuel cell assembly (36) in contact with a second side of the individual fuel cell assembly (36), and
a central recess (38) for leading an engine shaft (12) through,
wherein the fuel cells (54) each comprise an anode (62) and a cathode (60),
wherein the fuel cell assemblies (36) are stacked in an axial direction through pairs of first stacking manifolds (40) and second stacking manifolds (42) contacting each other,
wherein each first stacking manifold (40) comprises a hydrogen inlet (22) and is connected to first ends of the anodes (62) of the respective fuel cells (54), and
wherein each second stacking manifold (42) comprises a hydrogen and steam outlet (26) and is connected to second ends of the anodes (62) of the respective fuel cells (54).

2. Solid oxide fuel cell stack (16) of claim 1,
wherein the plurality of tubular solid oxide fuel cells (%4) of each ring-shaped assembly (36) are staggered radially to form at least two rings of fuel cells (54).

3. Solid oxide fuel cell stack (16) of claim 2,
wherein at least one of the fuel cell assemblies (36) comprises at least two groups (72) of fuel cells (54) separated in the radial direction, and
wherein the at least two groups (72) comprise different types of solid oxide fuel cells (54) with different operating temperature ranges.

4. Solid oxide fuel cell stack (16) of claim 3,
wherein the operating temperature range of a radially outer group (72c) is higher than the operating temperature range of a radial further inward group (72a, 72b).

5. Solid oxide fuel cell stack (16) of claim 3 or 4,
wherein at least one of the fuel cell assemblies (36) comprises three groups (72) of fuel cells (54) separated in the radial direction with different operating temperature ranges.

6. Solid oxide fuel cell stack (16) of claim 5,
wherein a radially outermost group (72c) comprises electrolyte supported solid oxide fuel cells,
wherein a radially central group (72b) comprises anode supported solid oxide fuel cells, and
wherein a radially innermost group (72a) comprises metal supported solid oxide fuel cells.

7. Solid oxide fuel cell stack (16) of claim 5 or 6,
wherein the radially outermost group (72c) comprises an operating temperature range of 750°C to 850°C,
wherein the radially central group (72b) comprises an operating temperature range of 650°C to 750°C, and
wherein a radially innermost group (72a) comprises an operating temperature range of 550°C to 650°C.

8. Solid oxide fuel cell stack (16) of any of the preceding claims,
wherein the first stacking manifold (40) and the second stacking manifold (42) are configured to alternately flow hydrogen from the hydrogen inlet (22) of the first stacking manifold (40) through circumferentially successive fuel cells (54) in an alternating axial flow direction in a zigzag manner.

9. Solid oxide fuel cell stack (16) of any of claims 1 to 7,
wherein the first stacking manifold (40) is configured to flow hydrogen from the hydrogen inlet (22) of the first stacking manifold (40) through circumferentially successive fuel cells (54) in the same axial flow direction towards the second stacking manifold (42).

10. Solid oxide fuel cell stack (16) of any of the preceding claims,
wherein the fuel cells (54) are spaced apart from each other in a radial direction,
wherein the fuel cell stack (16) comprises a housing (81) enclosing the fuel cells (54), and
wherein an air inlet (18) and an air outlet (20) are arranged at the housing (81) to let air flow through the housing (81) to flush the fuel cells (54) with air.

11. Solid oxide fuel cell stack (16) of claim 10,
further comprising baffle plates (86) inside the housing (81),
wherein the baffle plates (86) are spaced apart from each other in an axial direction and extend in a radial direction,
wherein axially consecutive baffle plates (86) have different radial dimensions, and
wherein the baffle plates (86) have openings (88) to let the fuel cells (54) pass through.

12. Solid oxide fuel cell stack (16) of any of the preceding claims,
wherein the stacking manifolds (40, 42) comprise stainless steel and an aluminium oxide coating (58).

13. Solid oxide fuel cell stack (16) of any of the preceding claims,
wherein the stacking manifolds (40, 42) comprise a hole (52) for each of the fuel cells (54).

14. Aircraft engine (2), comprising
- a solid oxide fuel cell stack (16) of any of the preceding claims,
- a combustion chamber (28) downstream the fuel cell stack (16),
- a turbine unit (34) downstream the combustion chamber, and
- a compressor unit (8) arranged upstream the fuel cell stack (16) and connected to the turbine unit (34) through an engine shaft (12) extending through the central recess (38).

15. Aircraft engine (2) of claim 14,
wherein the combustion chamber (28) is in fluid communication with the hydrogen and steam outlets (26) of the fuel cell assemblies (36) and comprises an air inlet (32).

## Patentansprüche

1. Festoxidbrennstoffzellenstapel (16) für ein Flugzeugtriebwerk (2), umfassend:
eine Mehrzahl von ringförmigen Brennstoffzellenanordnungen (36) mit jeweils einer Mehrzahl von rohrförmigen Festoxidbrennstoffzellen (54), wobei die Brennstoffzellen (54) parallel zueinander angeordnet und umlaufend um eine Mittelachse (78) verteilt sind,
mindestens einen ersten Stapelverteiler (40) für jede Brennstoffzellenanordnung (36) in Kontakt mit einer ersten Seite der einzelnen Brennstoffzellenanordnung (36),
mindestens einen zweiten Stapelverteiler (42) für jede Brennstoffzellenanordnung (36) in Kontakt mit einer zweiten Seite der einzelnen Brennstoffzellenanordnung (36), und eine zentrale Aussparung (38) zum Hindurchführen einer Triebwerkswelle (12),
wobei die Brennstoffzellen (54) jeweils eine Anode (62) und eine Kathode (60) umfassen,
wobei die Brennstoffzellenanordnungen (36) in axialer Richtung durch Paare von ersten Stapelverteilern (40) und zweiten Stapelverteilern (42), die einander kontaktieren, gestapelt sind,
wobei jeder erste Stapelverteiler (40) einen Wasserstoffeinlass (22) umfasst und mit ersten Enden der Anoden (62) der jeweiligen Brennstoffzellen (54) verbunden ist, und
wobei jeder zweite Stapelverteiler (42) einen Wasserstoff- und Dampfauslass (26) umfasst und mit zweiten Enden der Anoden (62) der jeweiligen Brennstoffzellen (54) verbunden ist.

2. Festoxidbrennstoffzellenstapel (16) nach Anspruch 1,
wobei die Mehrzahl der rohrförmigen Festoxidbrennstoffzellen (54) jeder ringförmigen Anordnung (36) radial versetzt sind, um mindestens zwei Ringe von Brennstoffzellen (54) zu bilden.

3. Festoxidbrennstoffzellenstapel (16) nach Anspruch 2,
wobei mindestens eine der Brennstoffzellenanordnungen (36) mindestens zwei Gruppen (72) von Brennstoffzellen (54) umfasst, die in radialer Richtung getrennt sind, und
wobei die mindestens zwei Gruppen (72) verschiedene Typen von Festoxidbrennstoffzellen (54) mit unterschiedlichen Betriebstemperaturbereichen umfassen.

4. Festoxidbrennstoffzellenstapel (16) nach Anspruch 3,
wobei der Betriebstemperaturbereich einer radial äußeren Gruppe (72c) höher ist als der Betriebstemperaturbereich einer radial weiter innen liegenden Gruppe (72a, 72b).

5. Festoxidbrennstoffzellenstapel (16) nach Anspruch 3 oder 4,
wobei mindestens eine der Brennstoffzellenanordnungen (36) drei Gruppen (72) von Brennstoffzellen (54) umfasst, die in radialer Richtung mit unterschiedlichen Betriebstemperaturbereichen getrennt sind.

6. Festoxidbrennstoffzellenstapel (16) nach Anspruch 5,
wobei eine radial äußerste Gruppe (72c) Elektrolyt-gestützte Festoxidbrennstoffzellen umfasst,
wobei eine radial zentrale Gruppe (72b) Anoden-gestützte Festoxidbrennstoffzellen umfasst, und
wobei eine radial innerste Gruppe (72a) Metall-gestützte Festoxidbrennstoffzellen umfasst.

7. Festoxidbrennstoffzellenstapel (16) nach Anspruch 5 oder 6,
wobei die radial äußerste Gruppe (72c) einen Betriebstemperaturbereich von 750 °C bis 850 °C umfasst,
wobei die radial zentrale Gruppe (72b) einen Betriebstemperaturbereich von 650 °C bis 750 °C umfasst, und
wobei eine radial innerste Gruppe (72a) einen Betriebstemperaturbereich von 550 °C bis 650 °C umfasst.

8. Festoxidbrennstoffzellenstapel (16) nach einem der vorhergehenden Ansprüche,
wobei der erste Stapelverteiler (40) und der zweite Stapelverteiler (42) dazu konfiguriert sind, Wasserstoff aus dem Wasserstoffeinlass (22) des ersten Stapelverteilers (40) abwechselnd durch umlaufend aufeinanderfolgende Brennstoffzellen (54) in einer abwechselnden axialen Strömungsrichtung in Zickzack-Weise zu leiten.

9. Festoxidbrennstoffzellenstapel (16) nach einem der Ansprüche 1 bis 7,
wobei der erste Stapelverteiler (40) dazu konfiguriert ist, Wasserstoff aus dem Wasserstoffeinlass (22) des ersten Stapelverteilers (40) durch umlaufend aufeinanderfolgende Brennstoffzellen (54) in der gleichen axialen Strömungsrichtung zum zweiten Stapelverteiler (42) zu leiten.

10. Festoxidbrennstoffzellenstapel (16) nach einem der vorhergehenden Ansprüche,
wobei die Brennstoffzellen (54) in radialer Richtung voneinander beabstandet sind,
wobei der Brennstoffzellenstapel (16) ein Gehäuse (81) umfasst, das die Brennstoffzellen (54) umschließt, und
wobei ein Lufteinlass (18) und ein Luftauslass (20) an dem Gehäuse (81) angeordnet sind, um Luft durch das Gehäuse (81) strömen zu lassen, um die Brennstoffzellen (54) mit Luft zu spülen.

11. Festoxidbrennstoffzellenstapel (16) nach Anspruch 10,
ferner umfassend Leitbleche (86) innerhalb des Gehäuses (81),
wobei die Leitbleche (86) in axialer Richtung voneinander beabstandet sind und sich in radialer Richtung erstrecken,
wobei axial aufeinanderfolgende Leitbleche (86) unterschiedliche radiale Abmessungen aufweisen, und
wobei die Leitbleche (86) Öffnungen (88) aufweisen, um die Brennstoffzellen (54) passieren zu lassen.

12. Festoxidbrennstoffzellenstapel (16) nach einem der vorhergehenden Ansprüche,
wobei die Stapelverteiler (40, 42) Edelstahl und eine Aluminiumoxidschicht (58) umfassen.

13. Festoxidbrennstoffzellenstapel (16) nach einem der vorhergehenden Ansprüche,
wobei die Stapelverteiler (40, 42) ein Loch (52) für jede der Brennstoffzellen (54) umfassen.

14. Flugzeugtriebwerk (2), umfassend
einen Festoxidbrennstoffzellenstapel (16) nach einem der vorhergehenden Ansprüche,
eine Brennkammer (28) stromabwärts des Brennstoffzellenstapels (16),
eine Turbineneinheit (34) stromabwärts der Brennkammer, und
eine Kompressoreinheit (8), die stromaufwärts des Brennstoffzellenstapels (16) angeordnet und mit der Turbineneinheit (34) durch eine Triebwerkswelle (12) verbunden ist, die sich durch die zentrale Aussparung (38) erstreckt.

15. Flugzeugtriebwerk (2) nach Anspruch 14,
wobei die Brennkammer (28) in Fluidverbindung mit den Wasserstoff- und Dampfauslässen (26) der Brennstoffzellenanordnungen (36) steht und einen Lufteinlass (32) umfasst.

## Revendications

1. Pile à combustible à oxyde solide (16) pour un moteur d'aéronef (2), comprenant :
une pluralité d'ensembles de piles à combustible annulaires (36) comprenant chacun une pluralité de piles à combustible tubulaires à oxyde solide (54), les piles à combustible (54) étant agencées parallèlement les unes aux autres et réparties circonférentiellement autour d'un axe central (78),
au moins un premier collecteur d'empilement (40) pour chaque ensemble de piles à combustible (36) en contact avec un premier côté de l'ensemble de piles à combustible individuel (36),
au moins un second collecteur d'empilement (42) pour chaque ensemble de piles à combustible (36) en contact avec un second côté de l'ensemble de piles à combustible individuel (36), et
un évidement central (38) pour le passage d'un arbre de moteur (12),
dans laquelle les piles à combustible (54) comprennent chacune une anode (62) et une cathode (60),
dans laquelle les ensembles de piles à combustible (36) sont empilés dans une direction axiale par l'intermédiaire de paires de premiers collecteurs d'empilement (40) et de seconds collecteurs d'empilement (42) en contact les uns avec les autres,
dans laquelle chaque premier collecteur d'empilement (40) comprend une entrée d'hydrogène (22) et est connecté aux premières extrémités des anodes (62) des piles à combustible respectives (54), et
dans laquelle chaque second collecteur d'empilement (42) comprend une sortie d'hydrogène et de vapeur (26) et est connecté aux secondes extrémités des anodes (62) des piles à combustible respectives (54).

2. Pile à combustible à oxyde solide (16) selon la revendication 1,
dans laquelle la pluralité de piles à combustible tubulaires à oxyde solide (54) de chaque ensemble annulaire (36) sont décalées radialement pour former au moins deux anneaux de piles à combustible (54).

3. Pile à combustible à oxyde solide (16) selon la revendication 2,
dans laquelle au moins l'un des ensembles de piles à combustible (36) comprend au moins deux groupes (72) de piles à combustible (54) séparés dans la direction radiale, et
dans laquelle les au moins deux groupes (72) comprennent différents types de piles à combustible à oxyde solide (54) avec différentes plages de températures de fonctionnement.

4. Pile à combustible à oxyde solide (16) selon la revendication 3,
dans laquelle la plage de températures de fonctionnement d'un groupe radialement extérieur (72c) est supérieure à la plage de températures de fonctionnement d'un groupe radialement plus intérieur (72a, 72b).

5. Pile à combustible à oxyde solide (16) selon la revendication 3 ou 4,
dans laquelle au moins l'un des ensembles de piles à combustible (36) comprend trois groupes (72) de piles à combustible (54) séparés dans la direction radiale avec différentes plages de températures de fonctionnement.

6. Pile à combustible à oxyde solide (16) selon la revendication 5,
dans laquelle un groupe radialement le plus extérieur (72c) comprend des piles à combustible à oxyde solide supportées par électrolyte,
dans laquelle un groupe radialement central (72b) comprend des piles à combustible à oxyde solide supportées par anode, et
dans laquelle un groupe radialement le plus intérieur (72a) comprend des piles à combustible à oxyde solide supportées par métal.

7. Pile à combustible à oxyde solide (16) selon la revendication 5 ou 6,
dans laquelle le groupe radialement le plus extérieur (72c) comprend une plage de températures de fonctionnement de 750 °C à 850 °C,
dans laquelle le groupe radialement central (72b) comprend une plage de températures de fonctionnement de 650 °C à 750 °C, et
dans laquelle un groupe radialement le plus intérieur (72a) comprend une plage de températures de fonctionnement de 550 °C à 650 °C.

8. Pile à combustible à oxyde solide (16) selon l'une quelconque des revendications précédentes,
dans laquelle le premier collecteur d'empilement (40) et le second collecteur d'empilement (42) sont configurés pour faire circuler alternativement l'hydrogène depuis l'entrée d'hydrogène (22) du premier collecteur d'empilement (40) à travers des piles à combustible (54) successivement circonférentielles dans une direction d'écoulement axiale alternée en zigzag.

9. Pile à combustible à oxyde solide (16) selon l'une quelconque des revendications 1 à 7,
dans laquelle le premier collecteur d'empilement (40) est configuré pour faire circuler l'hydrogène depuis l'entrée d'hydrogène (22) du premier collecteur d'empilement (40) à travers des piles à combustible (54) successivement circonférentielles dans la même direction d'écoulement axiale vers le second collecteur d'empilement (42).

10. Pile à combustible à oxyde solide (16) selon l'une quelconque des revendications précédentes,
dans laquelle les piles à combustible (54) sont espacées les unes des autres dans une direction radiale,
dans laquelle la pile à combustible (16) comprend un boîtier (81) enfermant les piles à combustible (54), et
dans laquelle une entrée d'air (18) et une sortie d'air (20) sont agencées au niveau du boîtier (81) pour laisser l'air circuler à travers le boîtier (81) afin de purger les piles à combustible (54) avec de l'air.

11. Pile à combustible à oxyde solide (16) selon la revendication 10,
comprenant en outre des plaques déflectrices (86) à l'intérieur du boîtier (81),
dans laquelle les plaques déflectrices (86) sont espacées les unes des autres dans une direction axiale et s'étendent dans une direction radiale,
dans laquelle des plaques déflectrices (86) axialement consécutives ont des dimensions radiales différentes, et
dans laquelle les plaques déflectrices (86) ont des ouvertures (88) pour laisser passer les piles à combustible (54).

12. Pile à combustible à oxyde solide (16) selon l'une quelconque des revendications précédentes,
dans laquelle les collecteurs d'empilement (40, 42) comprennent de l'acier inoxydable et un revêtement d'oxyde d'aluminium (58).

13. Pile à combustible à oxyde solide (16) selon l'une quelconque des revendications précédentes,
dans laquelle les collecteurs d'empilement (40, 42) comprennent un trou (52) pour chacune des piles à combustible (54).

14. Moteur d'aéronef (2), comprenant
une pile à combustible à oxyde solide (16) selon l'une quelconque des revendications précédentes,
une chambre de combustion (28) en aval de la pile à combustible (16),
une unité de turbine (34) en aval de la chambre de combustion, et
une unité de compresseur (8) agencée en amont de la pile à combustible (16) et connectée à l'unité de turbine (34) par un arbre de moteur (12) s'étendant à travers l'évidement central (38).

15. Moteur d'aéronef (2) selon la revendication 14,
dans lequel la chambre de combustion (28) est en communication fluidique avec les sorties d'hydrogène et de vapeur (26) des ensembles de piles à combustible (36) et comprend une entrée d'air (32).
